# EUROPÄISCHE PATENTSCHRIFT

(11) **EP 0 652 916 B1**
(45) Veröffentlichungstag und Bekanntmachung des Hinweises auf die Patenterteilung: **31.03.1999**
(21) Anmeldenummer: 93917600.4
(22) Anmeldetag: 20.07.1993
(51) Int. Cl.: C09J 189/00, C09J 103/02, C08K 5/42

(54) **VERFLÜSSIGUNGSMITTEL FÜR WÄSSRIGE KLEBSTOFFE**
THINNER FOR AQUEOUS ADHESIVES
FLUIDIFIANT POUR COLLES AQUEUSES

(30) Priorität: 27.07.1992 DE 4224734
(43) Veröffentlichungstag der Anmeldung: 17.05.1995
(73) Patentinhaber: Henkel Kommanditgesellschaft auf Aktien, 40191 Düsseldorf (DE)
(72) Erfinder: BEHLER, Ansgar, D-46240 Bottrop (DE); HERLFTERKAMP, Bernhard, D-46236 Bottrop (DE); BROICH, Ludwig, D-40589 Düsseldorf (DE); ONUSSEIT, Hermann, D-42781 Haan (DE)
(86) Internationale Anmeldenummer: EP9301915
(87) Internationale Veröffentlichungsnummer: WO9402557

(56) Entgegenhaltungen:
- FR-A- 394 173
- US-A- 2 966 422
- US-A- 3 429 828
- DATABASE WPI Week 8537, Derwent Publications Ltd., London, GB; AN 85-226908
- DATABASE WPI Week 8211, Derwent Publications Ltd., London, GB; AN 82-20515E

## Beschreibung

Die Erfindung betrifft ein Verflüssigungsmittel für wäßrige Klebstoffe.

Verflüssigungsmittel haben im wesentlichen die Aufgabe, das Viskositätsverhalten in einem gewünschten Bereich zu halten bzw. es dahin zu bringen, insbesondere eine Vergelung zu verhindern. Derartige Verflüssigungsmittel sind für wäßrige Klebstoffe, d.h. für Lösungen oder Dispersionen von z.B. Casein, Stärke, Dextrin oder Polyvinylacetat, bekannt, z.B. Harnstoff, Dicyandiamid (DCD), Ammoniumthiocyanat, Natriumnitrat, Ethylenglykol und Natrium-α-Naphthalinsulfonat (siehe Synthetic and protein adhesives for paper coating, Tappi Monograph Series No. 22, 1961). Sie werden in Mengen bis zu 25 Gew.-% zugesetzt.

Die US-A-3 429 828 offenbart ein Verflüssigungsmittel für Klebstoffe, insbesondere wäßrige Klebstoffe auf der Basis von Stärke, das aus einem cyclischen (aromatischen) Sulfonat und dessen Alkyl-substituierten Derivaten besteht. Das cyclische Sulfonat kann allein oder in Kombination mit üblichem Verflüssigungsmittel angewendet werden.

Die JP-A-60 147 487 offenbart die Verwendung von 5 bis 50 Gew.-% Natriumdodecylbenzosulfonaten als Verflüssigungsmittel in wäßrigen Klebstoffen auf Basis von Collagenhydrolysaten, insbesondere von Gelatine.

Die JP-A-57 021 467 offenbart eine wäßrige Klebtoffzusammensetzung auf Basis von Stärke, Dextrin, Casein ...., die Natriumdodecylbenzolsulfonate enthält.

Diese bekannten Verflüssigungsmittel zeigen neben ihren viskositätsregulierenden Eigenschaften auch unerwünschte Eigenschaften: So treten z.B. Änderungen im Abbindeverhalten auf (Harnstoff und Ethylenglykol), Geruchsbelästigungen (Dicyandiamid), Verfärbungen des Klebstoffes (Ammoniumthiocyanat), Beeinflussung der offenen Zeit (Harnstoff, Glykol), Neigung zur Kristallisation (Harntoff, DCD) oder eine unzureichende biologische Abbaubarkeit (Natrium-α-Naphthalinsulfonat). Darüber hinaus sind einige der Produkte nur sehr aufwendig herzustellen (Natrium-α-Naphthalinsulfonat).

Die erfindungsgemäße Aufgabe besteht darin, ein Verflüssigungsmittel für wäßrige Klebstoffe zu finden, das möglichst alle diese Nachteile vermeidet, insbesondere aber biologisch gut abbaubar ist, ohne daß die verflüssigende Wirkung verringert wird.

Die erfindungsgemäße Lösung besteht in der Verwendung von Alkali-, Ammonium- und/oder Erdalkali-Alkylbenzolsulfonaten mit bis zu 4 C-Atomen in dem Alkylrest als Verflüssigungsmittel in wäßrigen Klebstoffen auf der Basis von Casein, Dextrin sowie Polyvinylacetat, wobei als weitere Verflüssigungsmittel keine Nitrate eingesetzt werden. Unter "Alkali-" sind auch "Ammonium-"-Verbindungen zu verstehen.

Die zweckmäßigen Ausgestaltungen der Erfindung sind durch folgende Merkmale allein oder in Kombination charakterisiert:
- Der Alkylrest besteht aus einem Propyl-Rest.
- Das Alkalimetall ist Natrium.
- Die Konzentration des Alkali-Alkylbenzolsulfonats beträgt 0,5 bis 30 Gew.-%, insbesondere 1 bis 25 Gew.-%, bezogen auf die fertige Lösung.
- Der wäßrige Klebstoff basiert auf Casein, Stärke, Dextrin oder deren Derivate, soweit sie zur Herstellung von wäßrigen Klebstoffen geeignet sind, insbesondere auf biologisch abbaubaren makromolekularen Stoffen.

Neben den Alkali-Alkylbenzolsulfonaten können noch andere Verflüssigungsmittel zugesetzt werden.

Das Alkylbenzolsulfonat kann als wäßrige Lösung oder in Form eines Pulvers dem wäßrigen Klebstoff zugemischt werden.

Die Erfindung betrifft auch den Klebstoff mit einem Alkali-, Ammonium- und/oder Erdalkali-Alkylbenzolsulfonat als Verflüssigungsmittel.

Die Herstellung des wäßrigen Klebstoffes erfolgt nach bekannten Verfahren und bereitet einem Fachmann keine Schwierigkeiten.

Das erfindungsgemäß verwendbare Alkylbenzolsulfonat ist verglichen mit Naphthalinsulfonat leicht herstellbar und hat eine mindestens gleich gute verflüssigende Wirkung und ist vor allem vollständig biologisch abbaubar. Die biologische Abbaubarkeit nach dem Chemikaliengesetz (Total-Abbaubarkeit) ist für Cumol-Sulfonat mit Werten von ≧ 60 % BSB₂₈/CSB im geschlossenen Flaschentest bzw. ≧ 70 % DOC-Abnahme im modifizierten OECD-Screeningtest als "leicht abbaubar" einzustufen. Dagegen ist Natrium-α-naphthalinsulfonat wegen seiner ungenügenden Abbaubarkeit als nicht abbaubar einzustufen.

Die Erfindung wird anhand folgender Beispiele näher erläutert:

**Tabelle 1:**

| Zusammensetzung | | |
|---|---|---|
| Komponenten | Beispiel 1 [g] | Beispiel 2 [g] |
| Wasser | 1180 | 1180 |
| Konservierer | 4 | 4 |
| Entschäumer | 6 | 6 |
| Na-α-Naphthalinsulfonat | 32 | - |
| Na-Cumolsulfonat | - | 32 |
| Harnstoff | 190 | 190 |
| Maisstärke | 64 | 64 |
| abgebaute Kartoffelstärke | 40 | 40 |
| Casein | 400 | 400 |
| Borax | 80 | 80 |
| Zucker | 86 | 86 |

Die in Tabelle 1 angeführten Zusammensetzungen von wäßrigen Klebstoffen wurden folgendermaßen hergestellt:
Es wird ein Balkenrührwerk, Inhalt ca. 2,5 Liter, mit indirekter Beheizung sowie Kühlmöglichkeit verwendet. Das Wasser wird vorgelegt. Die in Tabelle 1 angegebenen Rohstoffe werden in der dort aufgezeigten Reihenfolge inclusive des Caseins unter Rühren in das Wasser gegeben. Diese Mischung wird 5 Minuten gerührt. Anschließend wird das Borax zugegeben und mit indirekter Beheizung auf 70 °C erhitzt. Diese Temperatur wird 10 Minuten gehalten. Anschließend wird gekühlt, wobei direkt beim Beginn des Kühlvorganges der Zucker zugegeben wird.

Als Maß für die verflüssigende Wirkung dient die Viskosität. Sie beträgt bei dem wäßrigen Klebstoff ohne jeglichen Zusatz an Natrium-α-Naphthalinsulfonat oder Natrium-Cumolsulfonat 160 000 mPas (Brookfield RVT bei 20 U/min und 25 °C sowie Spindel 7). Sofort nach der Herstellung des Klebstoffes mit einem Verflüssigungsmittel beträgt die Viskosität 36 000 mPas, wenn man das bekannte Natrium-α-Naphthalinsulfonat zusetzt (Beispiel 1) und 32 000 mPas, wenn man erfindungsgemäß Natrium-Cumolsulfonat zusetzt (siehe Beispiel 2).

## Patentansprüche

1. Verwendung von Alkali-, Ammonium- und/oder Erdalkali-Alkylbenzolsulfonaten mit bis zu 4 C-Atomen im Alkylrest als Verflüssigungsmittel in wäßrigen Klebstoffen auf der Basis von Casein, Dextrin sowie Polyvinylacetat, wobei als weitere Verflüssigungsmittel keine Nitrate eingesetzt werden.

2. Verwendung nach Anspruch 1, gekennzeichnet durch den Propyl-Rest.

3. Verwendung nach Anspruch 1 oder, gekennzeichnet durch Natrium als Alkalimetall.

4. Verwendung nach mindestens einem der Ansprüche 1, 2 oder 3, gekennzeichnet durch die Konzentration des Alkali-Alkylbenzolsulfonates im Bereich von 0,5 bis 30 Gew.-%, insbesondere von 15 bis 25 Gew.-%, bezogen auf die fertige Lösung.

5. Verwendung nach mindestens einem der Ansprüche 1 bis 4, gekennzeichnet durch einen wäßrigen Klebstoff auf Basis biologisch abbaubarer hochmolekularer Stoffe.

6. Wäßriger Klebstoff mit Alkali-, Ammonium- und/oder Erdalkali-Alkylbenzolsulfonaten als Verflüssigungsmittel nach mindestens einem der Ansprüche 1 bis 5.

## Claims

1. The use of alkali metal, ammonium and/or alkaline earth metal alkyl benzene sulfonates containing up to 4 C atoms in the alkyl group as liquifying agents in water-containing adhesives based on casein, dextrin and polyvinyl acetate, no nitrates being used as additional liquifying agents.

2. The use claimed in claim 1, characterized by the propyl radical.

3. The use claimed in claim 1 or 2, characterized by sodium as the alkali metal.

4. The use claimed in at least one of claims 1, 2 or 3, characterized by a concentration of the alkali metal alkyl benzene sulfonate of 0.5 to 30% by weight and more particularly 15 to 25% by weight, based on the final solution.

5. The use claimed in at least one of claims 1 to 4, characterized by a water-containing adhesive based on biodegradable high molecular weight substances.

6. A water-based adhesive containing alkali metal, ammonium and/or alkaline earth metal alkyl benzene sulfonates as liquifying agents according to at least one of claims 1 to 5.

## Revendications

1. Utilisation d'alkylbenzène sulfonates alcalins, d'ammonium, et/ou d'alcalino-terreux et ayant jusqu'à 4 atomes de carbone dans le radical alkyle comme fluidifiants dans les colles aqueuses à base de caséine, de dextrine, ainsi que d'acétate de polyvinyle, ou l'on n'utilise aucun nitrates comme autres fluidifiants.

2. Utilisation selon la revendication 1,
caractérisée par
le radical propyle.

3. Utilisation selon la revendication 1,
caractérisé par
le sodium comme métal alcalin.

4. Utilisation selon au moins une des revendications 2 ou 3,
caractérisée par
une concentration de l'alkylbenzène sulfonate alcalin comprise entre 0,5 et 30 % en poids, en particulier entre 15 et 25 % en poids, par rapport à la solution prête à l'emploi.

5. Utilisation selon au moins une des revendications 1 à 4,
caractérisée par
une colle aqueuse à base de matières à haut poids moléculaire biodégradables.

6. Colle aqueuse avec alkylbenzène sulfonates alcalins, d'ammonium et/ou d'alcalino-terreux comme fluidifiant selon au moins une des revendications 1 à 5.
